# EUROPEAN PATENT APPLICATION

(11) **EP 4 579 803 A1**
(43) Date of publication of application: **02.07.2025**
(21) Application number: 23913929.8
(22) Date of filing: 03.01.2023
(51) Int. Cl.: H01M 4/38, H01M 4/62, C01B 33/02

(54) **NEGATIVE ELECTRODE MATERIAL AND PREPARATION METHOD THEREFOR, BATTERY, AND ELECTRIC DEVICE**

(71) Applicant: Contemporary Amperex Technology (Hong Kong) Limited, Central (HK)
(72) Inventor: WU, Kai, Ningde, Fujian 352100 (CN); LIU, Liangbin, Ningde, Fujian 352100 (CN); WANG, Jiazheng, Ningde, Fujian 352100 (CN); QIN, Yuwei, Ningde, Fujian 352100 (CN); DENG, Jingxian, Ningde, Fujian 352100 (CN); LV, Zijian, Ningde, Fujian 352100 (CN); DONG, Xiaobin, Ningde, Fujian 352100 (CN); LI, Yuan, Ningde, Fujian 352100 (CN)
(74) Representative: Kraus & Lederer PartGmbB
(86) International application number: PCT/CN2023/070179
(87) International publication number: WO 2024/145769

(57) **Abstract**

This application discloses a negative electrode material and a preparation method thereof, a battery, and an electrical device. The negative electrode material includes porous carbon. The porous carbon includes iron and/or sulfur. An active material is included in pores of the porous carbon. In this way, this application endows the negative electrode material with high conductivity, small volume expansion, and high surface activity, thereby endowing the battery with a high capacity and excellent C-rate performance and cycle performance.

## Description

### TECHNICAL FIELD

This application relates to the technical field of battery materials, and in particular, to a negative electrode material and preparation method thereof, a battery, and an electrical device.

### BACKGROUND

With the rapid development of current society, the demand for green new energy and high-performance energy storage devices is increasingly urgent. As a new generation of green energy storage and conversion devices, batteries have been widely used in portable electronics, electric vehicles, and other fields. A battery includes a positive electrode material, a negative electrode material, a separator, an electrolyte solution, a current collector, and the like. Currently, the negative electrode material of the battery incurs problems such as volume expansion and low conductivity, thereby drastically shortening the battery life and deteriorating the battery performance. Therefore, high requirements are put forward on how to suppress volume expansion and improve cycle performance and conductivity.

### SUMMARY

In view of the above technical problems, this application provides a negative electrode material and a preparation method thereof, a battery, and an electrical device to endow the negative electrode material with high conductivity and a low expansion rate, so that the battery containing the negative electrode material is endowed with excellent C-rate performance and cycle performance and a high capacity.

According to a first aspect, this application provides a negative electrode material. The negative electrode material includes porous carbon. The porous carbon includes iron and/or sulfur. An active material is included in pores of the porous carbon.

In the technical solution of this embodiment of this application, the matrix material of the negative electrode material is porous carbon. The pore structure in the porous carbon can buffer the volume expansion of the active material and alleviate the problem caused by the volume expansion. Further, the porous carbon includes iron. The iron can improve the conductivity of the porous carbon and the negative electrode material. On the one hand, iron itself is a good conductor. On the other hand, at high temperature, iron produces an effect of catalyzing the graphitization of the carbon material, thereby improving the conductivity of the carbon material. In other words, the conductivity of the porous carbon and the negative electrode material is improved. Further, the porous carbon includes sulfur. The sulfur can improve the surface activity of the porous carbon material, and facilitate the deposition of the active material. At the same time, the radius of the sulfur atom (110 pm) is much larger than the radius of the carbon atom (70 pm), thereby effectively increasing the pore volume of micropores in the porous carbon, and reserving an expansion space for the active material. Further, the iron and sulfur elements exist simultaneously, thereby increasing the capacity of the negative electrode material and enhancing the C-rate performance.

In some embodiments, a content of iron in the negative electrode material is 50 to 3000 ppm. If the iron content is excessively low, the effect of improving the conductivity of the negative electrode material is weak. If the iron content is excessively high, the gravimetric capacity of the active material is reduced, and a risk of iron precipitation is posed, thereby impairing the safety performance of the battery material.

In some embodiments, a content of sulfur in the negative electrode material is 100 to 1500 ppm. If the sulfur content is excessively low, the effect of improving the surface activity of the porous carbon material will be weak. If the sulfur content is excessively high, the micropore volume and micropore content of the porous carbon will be excessively large.

In some embodiments, an average pore diameter of the porous carbon is 2 to 50 nm. By designing an appropriate pore diameter of the porous carbon, this application facilitates the deposition of the active material and reduces the difficulty of deposition.

In some embodiments, a pore volume of the porous carbon is 0.1 to 2.0 cm³/g. If the pore volume of the porous carbon is excessively low, the deposition of the active material inside the porous carbon will be adversely affected. If the pore volume of the porous carbon is excessively high, the strength of the porous carbon will be reduced significantly, thereby making the negative electrode material not resistant to pressure.

In some embodiments, a content ratio between micropores, mesopores, and macropores in the porous carbon is (5% to 25%): (65% to 90%): (5% to 15%). A relatively small pore volume of micropores makes it difficult for the active material to enter and deposit, but reserves an expansion space. An excessively high content of the micropores makes the unusable pore volume excessively large, and an excessively low content of the micropores makes the reserved expansion space insufficient. If the content of the mesopores or macropores is excessively high, the strength of the porous carbon will be reduced significantly, thereby making the negative electrode material not resistant to pressure. If the content of the mesopores is excessively low, the deposition of the active material will be adversely affected, thereby leading to an excessively low amount of effective active material deposited. If the content of the macropores is excessively low, the synthesis of the porous carbon material will be adversely affected, and the process is hardly practicable. By controlling an appropriate content ratio between the micropores, mesopores, and macropores in porous carbon, the above problems can be alleviated to achieve a balance.

In some embodiments, the active material includes a silicon-carbon material. The silicon-carbon material includes silicon nanoparticles and carbon nanoparticles. By depositing nano-silicon and nano-carbon in the pores of the porous carbon material, this application controls the size of silicon particles to fall within a relatively small range, and implements close bonding of nano-silicon, nano-carbon, and porous carbon. The increase in the silicon content can increase the capacity attributable to the negative electrode material, reduce the expansion effect of the negative electrode material, and improve the cycle performance of the battery.

In the technical solution of this embodiment of this application, by depositing silicon nanoparticles and carbon nanoparticles in the pores of the porous carbon material, this application can effectively control the size of the silicon nanoparticles. At the same time, the nano-silicon and nano-carbon are evenly distributed in the pores of the porous carbon, thereby effectively improving the conductivity of the negative electrode material and further reserving an expansion space for the nano-silicon, and in turn, further reducing the expansion of the negative electrode material.

In some embodiments, a particle diameter of the silicon nanoparticles is less than or equal to 10 nm. By reducing the size of the silicon nanoparticles, this application improves the cycle performance of the negative electrode material, reduces the local stress of the negative electrode material, and increases the structural stability of the negative electrode material during charging and discharging.

In some embodiments, a particle diameter of the carbon nanoparticles is less than or equal to 30 nm. By reducing the particle diameter of the carbon nanoparticles, this application improves the nano-scale mixing of nano silicon and nano carbon, and improves the conductivity of the negative electrode material.

In some embodiments, a mass ratio of silicon to carbon in the negative electrode material is Si: C = (20 to 55): (40 to 75). By defining the silicon content, this application endows the negative electrode material with a relatively high capacity. An appropriate carbon content facilitates effective formation of porous carbon and effectively isolates the subsequently deposited silicon nanoparticles.

In some embodiments, a mass ratio between silicon, carbon, and oxygen in the negative electrode material is Si: C: O = (20 to 55): (40 to 75): (0.5 to 5). By defining an appropriate oxygen content, this application improves the flexibility of the porous carbon and the stability of bonding between the porous carbon and the nano-silicon.

In some embodiments, a particle diameter Dᵥ₅₀ of the negative electrode material is 3 to 8 µm; and/or, a porosity of the negative electrode material is 5% to 30%; and/or, a specific surface area of the negative electrode material is less than or equal to 5.0 m²/g. By defining an appropriate particle diameter of the negative electrode material, this application alleviates the problem that the cycle performance is low due to an excessively small particle diameter and that the conductivity is low due to an excessively large particle diameter. By reserving an appropriate porosity, this application reserves an expansion space for the silicon material that expands during charging, buffers the expansion, and improves the cycle performance of the negative electrode material. If the specific surface area (BET) is excessively large, the performance of the material will be impaired. If the specific surface area is excessively small, the practicability of the process in the porous carbon material will be low.

According to a second aspect, this application provides a battery. The battery includes a positive electrode plate, a separator, and a negative electrode plate. The separator is located between the positive electrode plate and the negative electrode plate to serve a separation function. The negative electrode plate includes a negative electrode material and a negative current collector. The negative electrode material includes the negative electrode material disclosed in any one of the above embodiments.

The battery of this application contains the negative electrode material disclosed herein, and therefore, achieves at least the same advantages as the negative electrode material.

According to a third aspect, this application provides an electrical device. The electrical device includes the battery disclosed in any one of the above embodiments.

The electrical device of this application contains the battery disclosed herein, and therefore, achieves at least the same advantages as the battery.

According to a fourth aspect, this application provides a method for preparing a negative electrode material. The method includes: providing a porous carbon precursor, where the porous carbon precursor includes a carbon precursor, an iron precursor, and/or a sulfur precursor; treating the porous carbon precursor to obtain porous carbon; and depositing an active material in pores of the porous carbon to obtain the negative electrode material disclosed in any one of the above embodiments.

In some embodiments, the depositing an active material in pores of the porous carbon includes: depositing the active material in the pores of the porous carbon by gas phase co-deposition to form silicon nanoparticles and carbon nanoparticles. A volume ratio of a silicon source gas to a carbon source gas for silicon-carbon co-deposition is greater than or equal to 6: 1. By means of co-deposition, the silicon nanoparticles and carbon nanoparticles can be deposited more uniformly. If the volume ratio of the silicon source gas to the carbon source gas is excessively low, the amount of carbon deposition will be excessively large, thereby adversely affecting the silicon-carbon co-deposition and reducing the gravimetric capacity of the negative electrode material. If the volume ratio of the silicon source gas to the carbon source gas is excessively high, the amount of carbon deposition will be excessively small, and the growth of the nano-silicon is unable to be effectively isolated, and the conductivity of the negative electrode material is unable to be effectively improved.

In some embodiments, a concentration of a silicon source gas in a gas source for silicon-carbon co-deposition is 5% to 80%. If the concentration of the silicon source gas is excessively low and the deposition time is long, the production efficiency will be adversely affected. If the concentration of the silicon source gas is excessively high, the safety hazards during production will be high, and the nano-silicon is prone to agglomerate, thereby also adversely affecting the silicon-carbon co-deposition.

In some embodiments, a silicon source gas includes one or more of monosilane, disilane, trisilane, monochlorosilane, dichlorosilane, or trichlorosilane; and/or a carbon source gas includes one or more of methane, ethane, butane, propane, ethylene, propylene, butene, or acetylene.

In some embodiments, the iron precursor includes one or more of ferric trichloride, ferric nitrate, ferric sulfate, carbonyl iron, or ferrocene; and/or, the sulfur precursor includes one or more of hydrogen sulfide (H₂S), thiophene, a thiophene compound, thiol, thiophenol, or thioether.

In some embodiments, the preparation method further includes: performing gas phase deposition on the porous carbon to form a carbon coating layer. A deposition gas for the gas phase deposition is a mixed gas of C₂H₂ and N₂, where a volume percent of C₂H₂ is 2% to 20%, a gas flow rate introduced is 100 to 300 mL/min, a reaction temperature is 800 °C to 1000 °C, and a deposition reaction time is 0.5 to 2 hours. By disposing the carbon coating, this application improves the conductivity of the negative electrode material.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic structural diagram of a vehicle according to some embodiments of this application;
FIG. 2 is a schematic exploded view of a battery according to some embodiments of this application; and
FIG. 3 is a schematic exploded view of a battery cell according to some embodiments of this application.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In recent years, in order to achieve versatility of products, people have put forward higher requirements on the endurance, safety, capacity, and other performance metrics of batteries. Lithium-ion batteries are widely applied by virtue of the advantages such as a high voltage, a light weight, a long cycle life, no memory effect, and high safety. A lithium-ion battery includes a positive electrode material, a negative electrode material, a separator, an electrolyte solution, a current collector, and the like. A commercial negative electrode material for use in a lithium-ion battery may be a graphite material or a silicon material. However, the theoretical specific capacity of graphite is low, and is unable to meet the requirement of a high-energy-density device. Silicon serving as a negative electrode material possesses the advantages such as a high specific capacity, high safety, and abundant raw material sources, and is considered to be a new type of high-performance negative electrode material for use in a lithium-ion battery. However, when silicon is used as a negative electrode material, the lithium alloy in the battery will expand hugely in volume during charging and discharging, thereby drastically shortening the battery life. In addition, as a semiconductor, the silicon material is of relatively low conductivity and incurs a slow electron transfer rate. Therefore, high requirements are put forward on how to suppress volume expansion and improve cycle performance and conductivity.

To solve the above technical problems, a coating technology is used in the prior art. For example, a carbon substrate is coated with a catalyst, and gas phase deposition is performed on the pretreated substrate by using a mixed gas containing a carbon source and a silicon source. The deposition product is pre-lithiated, coated with a graphitized carbon source, and then carbonized to obtain a silicon-carbon negative electrode material. The silicon-carbon negative electrode material can improve the process compatibility between the preparation of a negative electrode plate and the preparation of a battery to some extent, reduce the volume expansion rate, and prolong the cycle life. However, the silicon of the silicon-carbon negative electrode material exists only in the coating, and the silicon content is less than or equal to 25%. The capacity of the silicon-carbon material is relatively low, and the practical application of the material is hugely limited. In addition, the temperature for synthesis of the crystalline carbon layer in the silicon-carbon material is relatively high, thereby causing silicon grains to grow, resulting in excessive silicon expansion in local sites, rupture of particles, and deterioration of cycle performance of the material. On the other hand, the process of synthesis of the silicon-carbon material is excessively complicated. The bonding strength between the substrate and the coating, and the bonding strength between one coating and another, are weak, thereby leading to deterioration of the cycle performance of the silicon-carbon material in practical applications.

The battery disclosed in an embodiment of this application is applicable to an electrical device that uses a battery as a power supply and is applicable to various energy storage systems that use a battery as an energy storage unit. The electrical devices may be, but are not limited to, a mobile phone, a tablet, a notebook computer, an electric toy, an electric tool, an electric power cart, an electric vehicle, a ship, a spacecraft, or the like. The electric toy may include stationary or mobile electric toys, such as game console, electric car toy, electric ship toy, electric airplane toy, and the like. The spacecraft may include airplane, rocket, space shuttle, spaceship, and the like.

For ease of description in the following embodiments, a vehicle 1000 is used as an example of the electrical device according to an embodiment of this application.

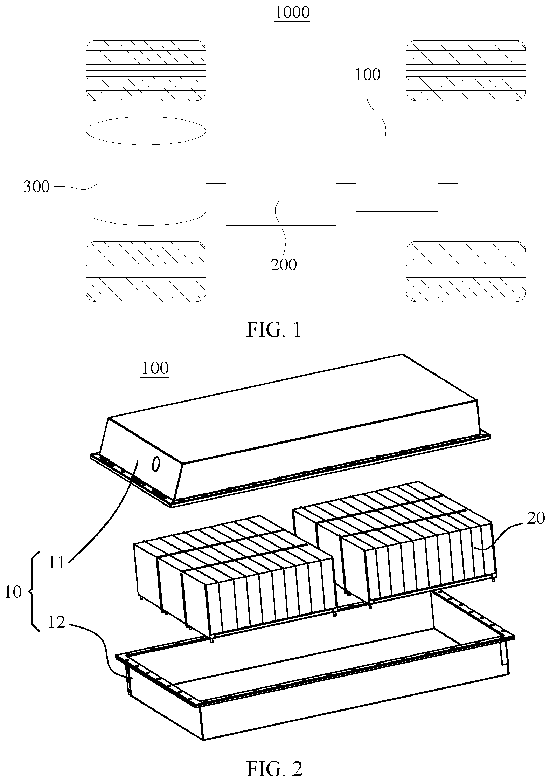

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is a schematic exploded view of a battery 100 according to some embodiments of this application. The battery 100 includes a box 10 and a battery cell 20. The battery cell 20 is accommodated in the box 10. The box 10 is configured to provide an accommodation space for the battery cell 20. The box 10 may be in various structures. In some embodiments, the box 10 may include a first part 11 and a second part 12. The first part 11 and the second part 12 fit and cover each other. The first part 11 and the second part 12 together define an accommodation space configured to accommodate the battery cell 20. The second part 12 may be a hollow structure opened at one end. The first part 11 may be a plate-like structure. The first part 11 fits the opening of the second part 12 so that the first part 11 and the second part 12 together define the accommodation space. Alternatively, both the first part 11 and the second part 12 may be hollow structures opened at one side. The opening of the first part 11 fits the opening of the second part 12. Definitely, the box 10 formed by the first part 11 and the second part 12 may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, to make up a battery 100, the plurality of battery cells 20 may be connected in series, parallel, or series-and-parallel pattern to form a battery module first, and then a plurality of battery modules are connected in series, parallel, or series-and-parallel pattern to form a whole and accommodated in the box 10. The battery 100 may further include other structures. For example, the battery 100 may further include a busbar component. The busbar component is configured to implement electrical connection between the plurality of battery cells 20.

Each battery cell 20 may be, but is not limited to, a secondary battery or primary battery; or, may be a lithium-sulfur battery, a sodium-ion battery, or a magnesium-ion battery. The battery cell 20 may be in a shape such as a cylinder, a flat body, a cuboid, or other shapes.

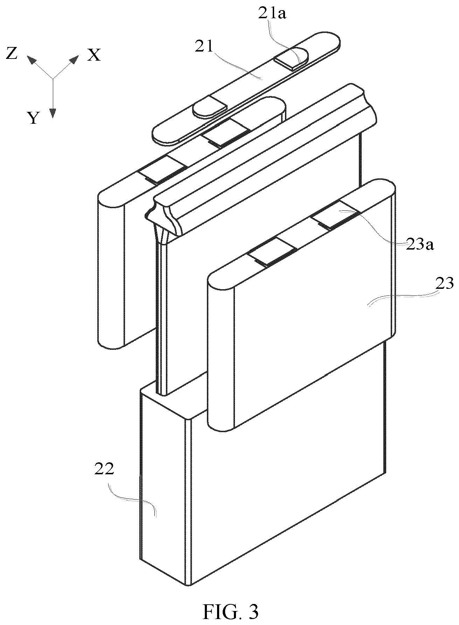

Referring to FIG. 3, FIG. 3 is a schematic structural exploded view of a battery cell 20 according to some embodiments of this application. The battery cell 20 is a minimum unit of a battery. As shown in FIG. 3, the battery cell 20 includes an end cap 21, a housing 22, an electrode assembly 23, and other functional components.

The end cap 21 is a component that fits and covers the opening of the housing 22 to isolate the internal environment of the battery cell 20 from the external environment. Without limitation, the shape of the end cap 21 may be adapted to the shape of the housing 22 to fit the housing 22. Optionally, the end cap 21 may be made of a material of appropriate hardness and strength (such as aluminum alloy), so that the end cap 21 is not prone to deform when squeezed or impacted. In this way, the battery cell 20 achieves higher structural strength and higher safety performance. Functional components such as electrode terminals 21a may be disposed on the end cap 21. The electrode terminals 21a may be configured to be electrically connected to the electrode assembly 23 to output or input electrical energy of the battery cell 20. In some embodiments, a pressure relief mechanism configured to release an internal pressure when the internal pressure or temperature of the battery cell 20 reaches a threshold may be further disposed on the end cap 21. The end cap 21 may also be made of a variety of materials such as copper, iron, aluminum, stainless steel, aluminum alloy, or plastic, and the materials are not particularly limited herein. In some embodiments, an insulator may be further disposed on an inner side of the end cap 21. The insulator may be configured to isolate an electrically connected component in the housing 22 from the end cap 21 to reduce short-circuit risks. For example, the insulator may be plastic, rubber, or the like.

The housing 22 is a component configured to fit the end cap 21 to form an internal environment of the battery cell 20. The formed internal environment may be used to accommodate the electrode assembly 23, an electrolyte solution, and other components. The housing 22 and the end cap 21 may be stand-alone components. An opening may be created on the housing 22. At the opening, the end cap 21 fits and covers the opening to form the internal environment of the battery cell 20. Without limitation, the end cap 21 and the housing 22 may be integrated instead. Specifically, the end cap 21 and the housing 22 may form a common connection interface before other components are put into the housing. Subsequently, when the interior of the housing 22 needs to be sealed, the end cap 21 is made to fit with the housing 22. The housing 22 may be in various shapes and sizes, such as a cuboid, cylinder, or hexagonal prism. Specifically, the shape of the housing 22 may be determined depending on the specific shape and size of the cell assembly 23. The housing 22 may be made of a variety of materials such as copper, iron, aluminum, stainless steel, aluminum alloy, or plastic, without being particularly limited herein.

The cell assembly 23 is a component in which electrochemical reactions occur in a battery cell 100. The housing 22 may contain one or more cell assemblies 23. The cell assembly 23 is primarily formed by winding or stacking a positive electrode plate and a negative electrode plate. A separator is generally disposed between the positive electrode plate and the negative electrode plate. The parts, coated with an active material, of the positive electrode plate and the negative electrode plate, constitute a body portion of the electrode assembly. The part, coated with no active material, of the positive electrode plate and the negative electrode plate separately, constitutes a tab 23a. The positive tab and the negative tab may be located at one end of the body portion together or at two ends of the body portion respectively. In a charge-and-discharge process of the battery, the positive active material and the negative active material react with an electrolyte solution. The tabs 23a are connected to electrode terminals to form a current circuit.

According to some embodiments of this application, this application provides a negative electrode material. The negative electrode material includes porous carbon. The porous carbon includes iron and/or sulfur. An active material is included in pores of the porous carbon.

The porous carbon means a carbonaceous material of different pore structures. The porous carbon may be biomass porous carbon or resin porous carbon. Different pore structures allow different molecules or ions to enter the pores. The porous carbon may be used as a matrix material to provide a matrix for the deposition and attachment of the active material.

In some embodiments, the active material is deposited in the pores of the porous carbon. The active material may be one or more of a silicon-carbon material, an aluminum-containing material, a tin-containing material, or an antimony-containing material. Further, the silicon-carbon material includes silicon nanoparticles and carbon nanoparticles. The resulting negative electrode material is a composite material of nano-silicon, nano-carbon, and porous carbon. In this way, the nano-silicon, the nano-carbon, and the porous carbon are closely bonded together to improve the structural stability of the negative electrode material.

The nano-silicon is a nano-scale amorphous pure silicon. The nano-carbon is nano-scale carbon particles, for example, may be carbon black. The silicon nanoparticles and the carbon nanoparticles are deposited in the pores of the porous carbon in a stacked, blended, and uniform manner.

In this embodiment of this application, by depositing silicon nanoparticles and carbon nanoparticles in the pores of the porous carbon material, this application can effectively control the size of the silicon nanoparticles. At the same time, the nano-silicon and nano-carbon are evenly distributed in the pores of the porous carbon, thereby effectively improving the conductivity of the negative electrode material and further reserving an expansion space for the nano-silicon, and in turn, further reducing the expansion effect of the negative electrode material.

In some embodiments, an average pore diameter of the porous carbon is 2 to 50 nm. Preferably, the average pore diameter is 20 to 30 nm, and specifically, may be 5 nm, 8 nm, 13 nm, 19 nm, 26 nm, 33 nm, 41 nm, 49 nm, or the like. By designing an appropriate pore diameter of the porous carbon, this application facilitates the deposition of the active material and reduces the difficulty of deposition.

In some embodiments, a particle diameter of the silicon nanoparticles is less than or equal to 10 nm. and specifically, may be 1 nm, 2.5 nm, 3 nm, 4.2 nm, 6 nm, 7.3 nm, 8 nm, 9 nm, or the like. By reducing the size of the silicon nanoparticles, this application improves the cycle performance of the negative electrode material, reduces the local stress of the silicon-carbon composite material (that is, negative electrode material), and increases the structural stability of the negative electrode material during charging and discharging.

In some embodiments, a particle diameter of the carbon nanoparticles is less than or equal to 30 nm. and specifically, may be 3 nm, 5 nm, 9 nm, 11 nm, 14 nm, 17 nm, 22 nm, 28 nm, or the like. By reducing the particle diameter of the carbon nanoparticles, this application improves the nano-scale mixing of nano silicon and nano carbon, and improves the conductivity of the negative electrode material.

In some embodiments, the porous carbon includes iron and/or sulfur.

The iron and/or sulfur are distributed in the matrix of the porous carbon, and may be added in a process of preparing the porous carbon.

In an embodiment, the porous carbon may be resin porous carbon. Iron and/or sulfur may be added to a resin precursor that is used for preparing the resin porous carbon, so that the resulting porous carbon contains iron and/or sulfur.

Specifically, an iron source and/or a sulfur source may be mixed with the resin precursor, and then the mixture is treated to obtain porous carbon containing iron and/or sulfur.

In this process, the iron source may be one or more of ferric trichloride, ferric nitrate, ferric sulfate, carbonyl iron, or ferrocene; and the sulfur source may be one or more of hydrogen sulfide (H₂S), thiophene, a thiophene compound, thiol, thiophenol, or thioether.

In this implementation, the iron can improve the conductivity of the porous carbon and the negative electrode material. On the one hand, iron itself is a good conductor. On the other hand, at high temperature, iron produces an effect of catalyzing the graphitization of the carbon material, thereby improving the conductivity of the carbon material. The sulfur can improve the surface activity of the porous carbon material, and facilitate the deposition of the nano-silicon and the nano-carbon. At the same time, the radius of the sulfur atom (110 pm) is much larger than the radius of the carbon atom (70 pm), thereby effectively increasing the pore volume and the content of the micropores in the porous carbon, and reserving a larger expansion space for the negative electrode material.

In some embodiments, a content of iron in the porous carbon is 50 to 3000 ppm, and specifically, may be 100 ppm, 200 ppm, 300 ppm, 600 ppm, 1000 ppm, 1700 ppm, 2200 ppm, 2800 ppm, or the like. If the iron content is excessively low, the effect of improving the conductivity of the negative electrode material is weak. If the iron content is excessively high, the gravimetric capacity of the negative electrode material is reduced, and a risk of iron precipitation is posed, thereby impairing the safety performance of the battery.

In some embodiments, the content of sulfur in the porous carbon is 100 to 1500 ppm, and specifically, may be 150 ppm, 210 ppm, 360 ppm, 530 ppm, 690 ppm, 820 ppm, 970 ppm, 1450 ppm, or the like. If the sulfur content is excessively low, the effect of improving the surface activity of the porous carbon material will be weak. If the sulfur content is excessively high, the micropore volume of the porous carbon will be excessively large.

In some embodiments, a mass ratio of silicon to carbon in the negative electrode material is Si: C = (20 to 55): (40 to 75), and specifically, may be 22: 43, 27: 56, 35: 62, 43: 69, 54: 71, or the like. By defining the silicon content, this application endows the negative electrode material with a relatively high capacity. An appropriate carbon content facilitates effective formation of porous carbon and effectively isolates the subsequently deposited silicon nanoparticles.

In some embodiments, a mass ratio between silicon, carbon, and oxygen in the negative electrode material is Si: C: O = (20 to 55): (40 to 75): (0.5 to 5), and specifically, may be 22: 43: 0.6, 27: 56: 1.3, 35: 62: 2.8, 43: 69: 3.7, 54: 71: 4.6, or the like. By defining an appropriate oxygen content, this application improves the flexibility of the porous carbon and the stability of bonding of the porous carbon, the nano-silicon, and the nano-carbon.

In some embodiments, a pore volume of the porous carbon is 0.1 to 2.0 cm³/g, and specifically, may be 0.2 cm³/g, 0.34 cm³/g, 0.41 cm³/g, 0.5 cm³/g, 0.63 cm³/g, 0.7 cm³/g, 0.85 cm³/g, 0.97 cm³/g, 1.07 cm³/g, 1.27 cm³/g, 1.47 cm³/g, 1.67 cm³/g, 1.87 cm³/g, 1.97 cm³/g, or the like. If the pore volume of the porous carbon is excessively low, the deposition of the nano-silicon and the nano-carbon inside the porous carbon will be adversely affected. If the pore volume of the porous carbon is excessively high, the strength of the porous carbon will be reduced significantly, thereby making the negative electrode material not resistant to pressure.

In some embodiments, a content ratio between micropores, mesopores, and macropores in the porous carbon is (5% to 25%): (65% to 90%): (5% to 15%), and specifically, may be 6%: 68%: 7%, 10%: 73%: 9%, 13%: 81%: 10%, 19%: 85%: 13%, 24%: 89%: 15%, or the like.

Depending on the pore diameter, pores may be divided into three categories: macropores (pore diameter > 50 nm), mesopores (intermediate pores) (2 nm ≤ pore diameter ≤ 50 nm), and micropores (pore diameter < 2 nm). An excessively small pore volume of micropores makes it difficult for the nano-silicon particles to enter and deposit, but reserves an expansion space. An excessively high content of the micropores makes the unusable pore volume excessively large, and an excessively low content of the micropores makes the reserved expansion space insufficient. If the content of the mesopores or macropores is excessively high, the strength of the porous carbon will be reduced, thereby making the negative electrode material not resistant to pressure. If the content of the mesopores is excessively low, the deposition of the silicon will be adversely affected, thereby leading to an excessively low amount of effective active material deposited. If the content of the macropores is excessively low, the synthesis of the porous carbon will be adversely affected. By controlling an appropriate content ratio between the micropores, mesopores, and macropores in porous carbon, the above problems can be alleviated to achieve a balance.

In some embodiments, the particle diameter Dᵥ₅₀ of the negative electrode material is 3 µm to 8 µm. Dᵥ₅₀ is a particle diameter value corresponding to a point at which the cumulative volume percent reaches 50% in a volume-based particle size distribution curve of the material particles. Specifically, this particle diameter may be 3.3 µm, 3.9 µm, 4.2 µm, 4.8 µm, 5.5 µm, 6 µm, 7 µm, 7.4 µm, or the like. By defining an appropriate particle diameter of the negative electrode material, this application alleviates the problem that the cycle performance is low due to an excessively small particle diameter and that the conductivity is low due to an excessively large particle diameter.

In some embodiments, the porosity of the negative electrode material is 5% to 30%, and specifically, may be 8%, 12%, 15%, 18%, 23%, 26%, 28%, or the like. By reserving an appropriate porosity, this application reserves an expansion space for the silicon material that expands during charging, buffers the expansion, and improves the cycle performance of the negative electrode material.

In some embodiments, the specific surface area of the negative electrode material is less than or equal to 5.0 m²/g. The specific surface area means a total area per unit mass of the material. Specifically, the specific surface area of the negative electrode material may be 0.5 m²/g, 1.3 m²/g, 1.8 m²/g, 2.5 m²/g, 3.2 m²/g, 4.5 m²/g, or the like. If the specific surface area (BET) is excessively large, the performance of the negative electrode material will be impaired. If the specific surface area is excessively small, the formation of the porous carbon will be adversely affected.

In the above embodiment, a negative electrode material is provided in this application. Nano-silicon and/or nano-carbon is contained in the pores of the porous carbon material of the negative electrode material. In this way, the size of silicon particles can be controlled effectively, so that the size of the silicon particles is controlled to fall within a relatively small range. In addition, the close bonding of nano-silicon, nano-carbon, and porous carbon is implemented, thereby improving the structural stability of the negative electrode material. The negative electrode material can be doped with silicon at a high mass percent, thereby achieving a high capacity of the negative electrode material, a relatively low volume expansion rate, and good cycle performance. Further, the negative electrode material further includes iron and sulfur, so that the negative electrode material is of high conductivity and incurs a low volume expansion rate, thereby endowing the negative electrode material with excellent C-rate performance and cycle performance.

According to some embodiments of this application, this application further provides a negative electrode plate. The negative electrode plate includes a negative electrode material and a negative current collector. The negative electrode material includes the negative electrode material disclosed in any one of the above embodiments.

According to some embodiments of this application, this application further provides a battery. The battery includes a positive electrode plate, a separator, and a negative electrode plate. The separator is located between the positive electrode plate and the negative electrode plate to serve a separation function. The negative electrode plate includes the negative electrode plate disclosed in any one of the above embodiments.

According to some embodiments of this application, this application further provides an electrical device. The electrical device includes the battery disclosed in any one of the foregoing technical solutions, and the battery is configured to provide electrical energy for the electrical device.

The electrical device may be any device or system described above in which the battery is applied.

According to some embodiments of this application, this application further provides a method for preparing a negative electrode material. The method for preparing a negative electrode material includes: providing porous carbon; and depositing an active material in pores of the porous carbon to obtain the negative electrode material disclosed in any one of the above embodiments.

Specifically, the porous carbon may be biomass porous carbon or resin porous carbon.

In an embodiment, the providing porous carbon includes: providing a porous carbon precursor, where the porous carbon precursor includes a carbon precursor, an iron precursor, and/or a sulfur precursor; and treating the porous carbon precursor to obtain porous carbon.

The iron precursor includes one or more of ferric trichloride, ferric nitrate, ferric sulfate, carbonyl iron, or ferrocene; and/or, the sulfur precursor includes one or more of hydrogen sulfide (H₂S), thiophene, a thiophene compound, thiol, thiophenol, or thioether. The carbon precursor includes one or more of furan resin, ureaformaldehyde resin, pyramine resin, phenolic resin, epoxy resin, polyoxymethylene methyl acrylate resin, or polyacrylonitrile resin.

In this embodiment, the iron precursor, the sulfur precursor, and the resin precursor are mixed so that the iron and sulfur can be evenly distributed in the porous carbon matrix, and the conductivity is more uniform.

Specifically, the iron source solution and the sulfur source solution are added into the resin precursor solution, stirred, and evenly dispersed to obtain a mixed solution A. The mass ratio between the iron source, the sulfur source, and the resin precursor is adjusted according to the material design requirement.

The mixed solution A is placed in a 70 °C to 140 °C oven, the mixed solution is pre-cured for 3 to 12 hours, and pulverized to obtain a powder B.

The powder B is put into the oven. Nitrogen is passed into the oven for protection, and the powder is fully cured at 150 °C to 220 °C for 8 to 20 hours to obtain powder C.

The powder C is put into a muffle oven. Nitrogen is passed into the muffle oven for protection, and the powder is carbonized at 900 °C to 3000 °C for 2 to 4 hours to form porous carbon powder D.

In some embodiments, an active material is deposited in the pores of the porous carbon. The active material includes silicon nanoparticles and carbon nanoparticles. The specific deposition method includes: depositing the active material in the pores of the porous carbon by gas phase co-deposition to form silicon nanoparticles and carbon nanoparticles. By means of co-deposition, the silicon nanoparticles and carbon nanoparticles can be deposited more uniformly.

Specifically, the powder D is subjected to chemical vapor deposition to implement silicon-carbon co-deposition. The volume ratio of a silicon source gas to a carbon source gas for the silicon-carbon co-deposition is adjusted. At the same time, at least one of N₂, H₂, or Ar may be introduced for dilution, so as to regulate the concentration of the silicon source gas. The flow rate of the mixed gas introduced is 100 to 1000 mL/ min, the reaction temperature is 400 °C to 1000 °C, and the deposition reaction time is 2 to 10 hours. The final product obtained in this step is a composite material E compounded of nano-silicon, nano-carbon, and porous carbon.

In an embodiment, the volume ratio of a silicon source gas to a carbon source gas for silicon-carbon co-deposition is greater than or equal to 6: 1, optionally is 7: 1 to 40: 1, and specifically may be 8: 1, 13: 1, 17: 1, 21: 1, 29: 1, 33: 1, 38: 1, 43: 1, or the like. If the volume ratio of the silicon source gas to the carbon source gas is excessively low, the amount of carbon deposition will be excessively large, thereby adversely affecting the silicon-carbon co-deposition and reducing the gravimetric capacity of the silicon-carbon composite material. If the volume ratio of the silicon source gas to the carbon source gas is excessively high, the amount of carbon deposition will be excessively small, and the growth of the nano-silicon is unable to be effectively isolated, and the conductivity of the silicon-carbon composite material is unable to be effectively improved.

In an embodiment, the silicon source gas and the carbon source gas may be diluted by introducing at least one of N₂, H₂, or Ar, so that the concentration of the silicon source gas in a gas source for silicon-carbon co-deposition is 5% to 80%. Specifically, the concentration of the silicon source gas may be 8%, 10%, 18%, 25%, 31%, 43%, 57%, 65%, 78%, or the like. If the concentration of the silicon source gas is excessively low and the deposition time is long, the production efficiency will be adversely affected. If the concentration of the silicon source gas is excessively high, the safety hazards during production will be high, and the nano-silicon is prone to agglomerate, thereby also adversely affecting the silicon-carbon co-deposition.

In some embodiments, a silicon source gas includes one or more of monosilane, disilane, trisilane, monochlorosilane, dichlorosilane, or trichlorosilane; and/or a carbon source gas includes one or more of methane, ethane, butane, propane, ethylene, propylene, butene, or acetylene.

In some embodiments, this method further includes: performing gas phase deposition on the porous carbon to form a carbon coating layer. A deposition gas for the gas phase deposition is a mixed gas of C₂H₂ and N₂, where a volume percent of C₂H₂ is 2% to 20%, a gas flow rate introduced is 100 to 300 mL/min, a reaction temperature is 800 °C to 100 °C, and a deposition reaction time is 0.5 to 2 hours. By disposing the carbon coating, this application improves the conductivity of the negative electrode material.

In the above embodiments, in the method for preparing a negative electrode material according to this application, the iron and sulfur are evenly distributed in the porous carbon matrix, thereby making the conductivity more uniform. The gas phase co-deposition method makes the silicon nanoparticles and carbon nanoparticles deposited more uniformly. The appropriate volume ratio of silicon source gas to carbon source gas increases the gravimetric capacity of the silicon-carbon composite material and effectively improves the conductivity of the silicon-carbon composite material. The inert gas introduced into the gas source of the silicon-carbon co-deposition can implement dilution, appropriately control the concentration of the silicon source gas in the gas source of the silicon-carbon co-deposition, and improve production efficiency and safety. The carbon coating disposed can improve the conductivity of the silicon-carbon negative electrode material.

In the above embodiment, a negative electrode material is provided in this application. The negative electrode material is a product of nano-silicon and/or nano-carbon co-deposition performed in the pores of the porous carbon material, thereby controlling the size of silicon particles effectively, and controlling the size of the silicon particles to fall within a relatively small range. In addition, the close bonding of nano-silicon, nano-carbon, and porous carbon is implemented, thereby improving the structural stability of the material. The material can be doped with silicon at a high mass percent, thereby achieving a high capacity of the negative electrode material, a relatively low volume expansion rate, and good cycle performance. Further, the negative electrode material includes iron and sulfur. By means of nanoscale mixing of the nano-silicon and nano-carbon and element doping, the negative electrode material is of high conductivity and incurs a low volume expansion rate, thereby endowing the material with excellent C-rate performance and cycle performance.

The beneficial effects of this application are further described below with reference to embodiments.

To make the technical problems to be solved by an embodiment of this application, and the technical solutions and beneficial effects of this application clearer, the following describes this application in further detail with reference to embodiments and drawings. Evidently, the described embodiments are merely a part of but not all of the embodiments of this application. The following description of at least one exemplary embodiment is merely illustrative, and is in no way intended as a limitation on this application or the use thereof. All other embodiments derived by a person of ordinary skill in the art based on the embodiments of this application without making any creative efforts still fall within the protection scope of this application.

### 1. Preparing porous carbon

Weighing out an amount of an iron source material, sulfur source material, and resin material at a preset mass percent. In this embodiment, ferrocene is selected as the iron source material, hydrogen sulfide is selected as the sulfur source material, and phenolic resin is selected as the resin material. Dissolving such materials to obtain a mixed solution A. Placing the mixed solution A into an oven for pre-curing at a temperature of 80 °C for a duration of 10 hours. Pulverizing the pre-cured material to obtain a powder B. Placing the powder B into an oven, passing nitrogen into the oven for protection to fully cure the powder B at a temperature of 160 °C for a duration of 15 hours to obtain a powder C. Placing the powder C into a muffle oven, passing nitrogen into the oven for protection, carbonizing the powder C is at a temperature of 1000 °C for a duration of 4 hours to form a porous carbon powder D. The characteristic parameters of each embodiment and comparative embodiment are shown in Table 1 in detail.

### 2. Preparing a silicon-carbon negative electrode material

Performing chemical vapor deposition on the powder D to implement silicon-carbon co-deposition and obtain a silicon-carbon negative electrode material. Adjusting the volume ratio of the silicon source gas to the carbon source gas for silicon-carbon co-deposition to 30: 1, and adjusting the concentration of the silicon source gas to 30%. In this embodiment, monosilane is selected as the silicon source gas, and acetylene is selected as the carbon source gas.

### 3. Preparing a battery

### 1) Preparing a negative electrode plate

Negative electrode slurry: Mixing the silicon-carbon negative electrode material prepared in each embodiment and comparative embodiment above, artificial graphite, a binder styrene-butadiene rubber (SBR), a binder polyacrylic acid (PAA), a dispersant CMC-Na, conductive carbon black Super-P (SP), and carbon nanotubes (CNT) at a mass ratio of 10%: 85%: 2%: 1%: 1%: 0.7%: 0.3% in an appropriate amount of deionized water, and stirring well to make a negative electrode slurry. Coating a surface of negative current collector copper foil with the negative electrode slurry, and performing drying and cold-pressing to obtain a negative electrode plate.

### 2) Preparing a positive electrode plate

Mixing LiNi_{0.8}Co_{0.1}Mn_{0.1}O₂ (NCM811) as a positive active material, Super P as a conductive agent, and PVDF as a binder at a mass ratio of 96.5: 1.5: 2 in an appropriate amount of NMP solvent, and stirring well to form a positive electrode slurry. Coating a surface of positive current collector aluminum foil with the positive electrode slurry, and performing drying, cold-pressing, and slitting to obtain a positive electrode plate.

### 3) Separator

Using a PP/PE composite film as a separator.

### 4) Electrolyte solution

Mixing ethylene carbonate (EC), ethyl methyl carbonate (EMC), and diethyl carbonate (DEC) at a volume ratio of 1: 1: 1, and dissolving LiPF₆ in the forgoing solution homogeneously to obtain an electrolyte solution. In the electrolyte solution, the concentration of the LiPF₆ is 1 mol/L.

### 5) Assembling a battery

Stacking the positive electrode plate, the separator, and the negative electrode plate in sequence, and winding the stacked structure to obtain an electrode assembly. Placing the electrode assembly into an outer package, injecting the electrolyte solution prepared above, and performing steps such as packaging, standing, chemical formation, and aging to obtain a secondary battery.

4. The test methods of relevant parameters of the negative electrode materials and batteries in embodiments and comparative embodiments of this application are described below.

### (1) Testing the pore diameters and pore volumes of micropores, mesopores, and macropores inside the porous carbon substrate

The pore diameter and pore volume may be determined by using a TriStarII3020 pore size distribution analyzer with reference to the standards GB/T 19587-2017 and GB/T 21650.2-2008. The specific test method includes: Letting an adsorbate gas be adsorbed onto a material specimen at a constant temperature and under a series of gradually increasing pressures; plotting a curve of the volumes of pores of different pore sizes against corresponding partial pressures to characterize the pore size and pore volume distribution of the porous carbon substrate material, and then calculating the average pore diameter.

In each embodiment and comparative embodiment, the pore volume of the obtained porous carbon is 0.8 cm³/g, and the content ratio between the obtained micropores, mesopores, and macropores is 20: 70: 10. The pore diameters of the porous carbon obtained in each embodiment and comparative embodiment are detailed in Table 1.

### (2) Testing the porosity

Measuring the true density of the material by using a true density meter (such as AccuPycII1340). A specific operation process is: Weighing out a portion of the material as a sample, placing the sample into a true density tester, sealing the test system, and passing helium gas into the system according to the procedure. Detecting the gas pressure in the sample chamber and the expansion chamber, and calculating the true volume Vᵣ according to the Bohr's law (PV = nRT), and then calculating the true density as: ρᵣ = m/Vᵣ. Measuring the apparent density of the material in the following process: Putting the powder of the material in a specified amount by mass into a cylindrical mold with an inner diameter of 10 mm; and applying a pressure of 200 MPa to obtain an apparent volume V₀ of the corresponding powder, and calculating the apparent density of the material as: ρ₀ = m/V₀.

Calculating the porosity of the material as: P = 1 - ρ₀/ρᵣ × 100%.

The porosities of the porous carbon obtained in each embodiment and comparative embodiment are detailed in Table 1.

### (3) Testing the specific surface area

Testing the specific surface area SSA of the negative electrode material by using a specific surface area tester (such as TriStar II 3020) with reference to the standard GB/T 19587-2017 *Determination of the Specific Surface Area of Solids by Gas Adsorption Using the BET Method.* A specific process includes: Measuring the quantity of a gas adsorbed on the surface of a solid at a constant low temperature and under different relative pressures, and then determining the monolayer adsorption capacity of the sample based on the Brunauer-Emmett-Teller (BET) multilayer adsorption theory, and calculating the specific surface area of the solid. The specific surface area of the negative electrode material obtained in each embodiment and comparative embodiment is 4.5 m²/g.

### (4) Testing the volume median diameter Dᵥ₅₀

Determining Dᵥ₅₀ by using a laser particle size analyzer (such as Malvern Mastersizer 3000) with reference to the standard GB/T 19077.1-2016, where Dᵥ₅₀ is a diameter of the material particles corresponding to a point at which a cumulative volume percentage of measured particles reaches 50% of a total volume of all the sample particles in a volume-based particle size distribution curve viewed from a small-diameter side. The Dᵥ₅₀ of the negative electrode material obtained in each embodiment and comparative embodiment is 7 µm.

### (5) Testing the average particle diameter

The particle diameters of 100 silicon nanoparticles and the particle diameters of 100 carbon nanoparticles may be measured separately by using a transmission electron microscope (such as Thermo Fisher F200i S/TEM) (TEM test), and then the measured values are averaged out to obtain the average particle diameter. For irregularly shaped particles, the largest diameter of the particles is recorded as the measured particle diameter. In the negative electrode materials obtained in each embodiment and comparative embodiment, the average particle diameter of the silicon nanoparticles is 8 nm, and the average particle diameter of the carbon nanoparticles is 12 nm.

### (6) Testing the mass percent of elements

Evaluating the oxygen content by using a cross-sectional EDS energy spectrum with reference to "quantitative analysis using microbeam analysis and energy-dispersive spectroscopy" in the standard GB/T 17359-2012. A specific operation process includes: Putting the sample powder into an ion polisher (such as IB-19500CP); letting an ion source ionize the argon gas under a vacuum condition to generate argon ions; and accelerating and focusing the argon ions so that the high-speed argon ions impact the atoms or molecules out of the sample surface to implement ion polishing and enable cross-sectional analysis; and putting a cross-section of the resulting powder into an energy dispersive X-ray spectrometer (model: OXFORD, for example) to measure the oxygen content at 10 sites on the cross-section of the material, and averaging out the measured values at the sites to obtain the oxygen content of the material.

Evaluating the silicon content by using an inductively coupled plasma emission spectrometer (ICP) with reference to the U.S. Environmental Protection Agency Standard EPA 6010D-2018. A specific operation process includes: Putting the sample powder into a microwave digester (model: CEM-Mars6, for example), digesting the powder to obtain a solution, passing the solution into the ICP instrument (model: ICAP7400, for example), and calculating the silicon content in the material through comparison with the silicon concentration in the standard solution.

Evaluating the carbon content by using a carbon sulfur analyzer (Dekai HCS-140 infrared carbon sulfur analyzer, for example) with reference to the standard GB/T 20123-2006/ISO 15350:200. A schematic process is: Heating a sample of the material in a high-frequency furnace under an oxygen-rich condition to combust the sample material at a high temperature so that carbon and sulfur are oxidized into a gas of carbon dioxide. Passing the gas into an absorption pool to absorb corresponding infrared radiation, and then converting the absorbed infrared beam into corresponding signals by using a detector, and calculating the carbon content in the material based on the signals. The mass ratio of Si: C: O in the silicon-carbon negative electrode material obtained in each embodiment and comparative embodiment is 45: 50: 5.

**Table 1 Process and performance parameters of negative electrode material in each embodiment and comparative embodiment**

| Serial number | Mass ratio of iron: sulfur: resin | Iron content (ppm) | Sulfur content (ppm) | Pore diameter of porous carbon (nm) | Porosity of silicon-carbon negative electrode material |
|---|---|---|---|---|---|
| Embodiment 1 | 0.015: 0.02: 170 | 50 | 200 | 20 | 20% |
| Embodiment 2 | 0.060: 0.02: 170 | 200 | 200 | 20 | 20% |
| Embodiment 3 | 0.300: 0.02: 170 | 1000 | 200 | 20 | 20% |
| Embodiment 4 | 0.900: 0.02: 170 | 3000 | 200 | 20 | 20% |
| Embodiment 5 | 0.021: 0.02: 170 | 70 | 200 | 20 | 20% |
| Embodiment 6 | 0.021: 0.06: 170 | 70 | 600 | 20 | 20% |
| Embodiment 7 | 0.021: 0.15: 170 | 70 | 1500 | 20 | 20% |
| Embodiment 8 | 0.021: 0.02: 170 | 70 | 200 | 2 | 20% |
| Embodiment 9 | 0.021: 0.02: 170 | 70 | 200 | 5 | 20% |
| Embodiment 10 | 0.021: 0.02: 170 | 70 | 200 | 10 | 20% |
| Embodiment 11 | 0.021: 0.02: 170 | 70 | 200 | 30 | 20% |
| Embodiment 12 | 0.021: 0.02: 170 | 70 | 200 | 50 | 20% |
| Embodiment 13 | 0.021: 0.02: 170 | 70 | 200 | 20 | 5% |
| Embodiment 14 | 0.021: 0.02: 170 | 70 | 200 | 20 | 10% |
| Embodiment 15 | 0.021: 0.02: 170 | 70 | 200 | 20 | 30% |
| Embodiment 16 | 0.006: 0.003: 170 | 20 | 30 | 20 | 20% |
| Embodiment 17 | 1.500: 0.003: 170 | 5000 | 30 | 20 | 20% |
| Embodiment 18 | 0.006: 0.25: 170 | 20 | 2500 | 20 | 20% |
| Embodiment 19 | 0.021: 0: 170 | 70 | 0 | 20 | 20% |
| Embodiment 20 | 0: 0.02: 170 | 0 | 200 | 20 | 20% |
| Comparative Embodiment 1 | 0: 0: 170 | 0 | 0 | 20 | 20% |

### (7) Testing the cycle performance of the battery

### 45 °C cycle performance test:

Charging a fresh secondary battery at a constant temperature of 45 °C and at a constant current of 1C until the voltage reaches 4.25 V, and then charging the battery at a constant voltage of 4.25 V until the current is less than or equal to 0.05 mA. Leaving the battery to stand for 5 minutes, and then discharging the battery at a constant current of 1C until the voltage reaches 2.5 V, and leaving the battery to stand for 5 minutes, thereby completing one cycle of charge and discharge. Recording the discharge capacity at this time as 1^{st}-cycle discharge capacity of the secondary battery. Charging and discharging the secondary battery for 300 cycles according to the foregoing method, and recording the 300^{th}-cycle discharge capacity.

Calculating the capacity retention rate of the secondary battery after 300 cycles at 45 °C as: CR 45 °C = (300^{th}-cycle discharge capacity/1^{st}-cycle discharge capacity × 100%. The cycle performance of the batteries obtained in each embodiment and comparative embodiment is detailed in Table 2.

Testing the cycle expansion performance of the secondary battery at 45 °C:

Recording the thickness of the negative electrode plate of the secondary battery upon completion of the cold-pressing process as h₀. Performing the above cycle performance test method of the secondary battery at 45 °C for 300 cycles. Charging the battery at a constant current of 1C rate until the voltage reaches 4.25 V, and then charging the battery at a constant voltage of 4.25 V until the current is less than or equal to 0.05 mA, and then leaving the battery to stand for 5 minutes. Disassembling the cycled battery cell in a drying room, recording the thickness of the negative electrode plate after 300 cycles as h₃₀₀. Calculating the 300-cycle expansion rate Δh₃₀₀ of the secondary battery at 45 °C as: Δh₃₀₀ (%) = (h₃₀₀ - h₀)/h₀ × 100%.

The expansion resistance performance of the batteries obtained in each embodiment and comparative embodiment is detailed in Table 2.

### C-rate performance test method:

Charging a fresh secondary battery at a constant current of 0.33C (that is, a current by which the nominal capacity of the battery is fully discharged within 3 hours) and at a temperature of 25 °C until the voltage reaches a cut-off voltage 4.25 V, and then charging the battery at a constant voltage until the current reaches 0.05C. Leaving the battery to stand for 5 minutes. Discharging the battery at a constant current of 0.33C until the voltage reaches a cut-off voltage 2.5 V, and recording an actual capacity of the battery as C₀.

Subsequently, charging the battery at a constant current of 0.33 C until a cut-off voltage 4.25 V, and then charging the battery at a constant voltage until the current reaches 0.05 C. Leaving the battery to stand for 5 minutes, and then discharging the battery at a constant current of 3 C until a cut-off voltage 2.5 V. Recording the actual capacity of the battery as C₃.

The C-rate performance of the secondary battery may be characterized as DR = C₃/C₀ × 100%. The higher the DR value, the higher the C-rate performance of the material. The C-rate performance of the batteries obtained in each embodiment and comparative embodiment is detailed in Table 2.

**Table 2 Performance parameters of batteries in each embodiment and comparative embodiment**

| Serial number | Capacity retention rate CR 45 °C | Cycle expansion rate Δh₃₀₀ | C-rate performance DR |
|---|---|---|---|
| Embodiment 1 | 96.50% | 34.90% | 83.60% |
| Embodiment 2 | 96.80% | 34.60% | 84.40% |
| Embodiment 3 | 97.20% | 34.20% | 85.10% |
| Embodiment 4 | 97.50% | 33.80% | 85.90% |
| Embodiment 5 | 96.60% | 34.50% | 83.90% |
| Embodiment 6 | 96.90% | 33.70% | 84.30% |
| Embodiment 7 | 97.20% | 32.60% | 84.70% |
| Embodiment 8 | 95.60% | 36.40% | 82.10% |
| Embodiment 9 | 96.30% | 35.90% | 82.70% |
| Embodiment 10 | 96.40% | 35.50% | 83.10% |
| Embodiment 11 | 97.30% | 34.30% | 84.40% |
| Embodiment 12 | 96.40% | 33.60% | 85.10% |
| Embodiment 13 | 95.70% | 36.20% | 84.90% |
| Embodiment 14 | 96.20% | 35.30% | 84.20% |
| Embodiment 15 | 97.10% | 33.70% | 83.10% |
| Embodiment 16 | 92.30% | 39.10% | 79.80% |
| Embodiment 17 | 88.40% | 40.50% | 88.90% |
| Embodiment 18 | 85.70% | 30.70% | 75.20% |
| Embodiment 19 | 93.50% | 40.80% | 81.20% |
| Embodiment 20 | 90.70% | 34.20% | 79.10% |
| Comparative Embodiment 1 | 90.30% | 41.10% | 78.80% |

As can be seen from the relevant data in Table 2, after the batteries in Embodiments 1 to 15 are cycled for 300 cycles at 45 °C, the capacity retention rate is 95.6% to 97.5%, the cycle expansion rate Δh₃₀₀ is 32.6% to 36.4%, the C-rate performance DR is 82.1% to 85.9%, and the secondary batteries exhibit good cycle stability, a low volume expansion rate, and good kinetic performance. In the negative electrode material of Embodiment 16, the iron content is 20 ppm, the sulfur content is 30 ppm, the iron content and the sulfur content are extremely low, and therefore, the capacity retention rate after cycling at 45 °C for 300 cycles is 92.3%, the cycle expansion rate Δh₃₀₀ is 39.1%, and the C-rate performance DR is 79.8%. In the negative electrode material of Embodiment 17, the iron content is 5000 ppm, the sulfur content is 30 ppm, and therefore, the capacity retention rate after cycling at 45 °C for 300 cycles is 88.4%, the cycle expansion rate Δh₃₀₀ is 40.5%, and the C-rate performance DR is 88.9%. In the negative electrode material of Embodiment 18, the iron content is 20 ppm, the sulfur content is 2500 ppm, and therefore, the capacity retention rate after cycling at 45 °C for 300 cycles is 85.7%, the cycle expansion rate Δh₃₀₀ is 30.7%, and the C-rate performance DR is 75.2%. Although the cycle performance, cycle expansion resistance performance, and the kinetic performance of Embodiments 16 to 18 are not as good as those of Embodiments 1 to 15, the iron content and the sulfur content still produce a significant effect on the performance of the silicon-carbon negative electrode material. The silicon-carbon negative electrode material is of high conductivity, and the secondary battery containing the material incurs a relatively weak expansion effect and exhibits excellent cycle performance and C-rate performance concurrently.

Described above are merely some embodiments of this application without limiting the patent scope of this application. Any and all equivalent structural variations and equivalent process variations made by using the content of the specification and the drawings of this application, and the content hereof used directly or indirectly in any other related technical fields, still fall within the patent protection scope of this application.

## Claims

1. A negative electrode material, **characterized in that** the negative electrode material comprises porous carbon, the porous carbon comprises iron and/or sulfur, and an active material is comprised in pores of the porous carbon.

2. The negative electrode material according to claim 1, **characterized in that**
a content of iron in the negative electrode material is 50 to 3000 ppm; and/or
a content of sulfur in the negative electrode material is 100 to 1500 ppm.

3. The negative electrode material according to claim 1 or 2, **characterized in that** an average pore diameter of the porous carbon is 2 to 50 nm.

4. The negative electrode material according to any one of claims 1 to 3, **characterized in that** a pore volume of the porous carbon is 0.1 to 2.0 cm³/g.

5. The negative electrode material according to any one of claims 1 to 4, **characterized in that** a content ratio between micropores, mesopores, and macropores in the porous carbon is (5% to 25%): (65% to 90%): (5% to 15%).

6. The negative electrode material according to any one of claims 1 to 5, wherein the active material comprises a silicon-carbon material, and the silicon-carbon material comprises silicon nanoparticles and carbon nanoparticles.

7. The negative electrode material according to claim 6, **characterized in that**
a particle diameter of the silicon nanoparticles is less than or equal to 10 nm; and/or
a particle diameter of the carbon nanoparticles is less than or equal to 30 nm.

8. The negative electrode material according to claim 6 or 7, **characterized in that** a mass ratio of silicon to carbon in the negative electrode material is Si: C = (20 to 55): (40 to 75).

9. The negative electrode material according to any one of claims 6 to 8, **characterized in that** a mass ratio between silicon, carbon, and oxygen in the negative electrode material is Si: C: O = (20 to 55): (40 to 75): (0.5 to 5).

10. The negative electrode material according to any one of claims 1 to 9, **characterized in that**
a particle diameter Dᵥ₅₀ of the negative electrode material is 3 to 8 µm; and/or
a porosity of the negative electrode material is 5% to 30%; and/or
a specific surface area of the negative electrode material is less than or equal to 5.0 m²/g.

11. A battery, **characterized in that** the battery comprises a positive electrode plate, a separator, and a negative electrode plate, the separator is located between the positive electrode plate and the negative electrode plate to serve a separation function, the negative electrode plate comprises a negative electrode material and a negative current collector, and the negative electrode material comprises the negative electrode material according to any one of claims 1 to 10.

12. An electrical device, **characterized in that** the electrical device comprises the battery according to claim 11.

13. A method for preparing a negative electrode material, **characterized in that** the method comprises:
providing a porous carbon precursor, wherein the porous carbon precursor comprises a carbon precursor, an iron precursor, and/or a sulfur precursor;
treating the porous carbon precursor to obtain porous carbon; and
depositing an active material in pores of the porous carbon to obtain the negative electrode material according to any one of claims 1 to 10.

14. The method for preparing a negative electrode material according to claim 13, **characterized in that**
the iron precursor comprises one or more of ferric trichloride, ferric nitrate, ferric sulfate, carbonyl iron, or ferrocene; and/or
the sulfur precursor comprises one or more of hydrogen sulfide (H₂S), thiophene, a thiophene compound, thiol, thiophenol, or thioether.

15. The method for preparing a negative electrode material according to claim 13 or 14, **characterized in that** the depositing an active material in pores of the porous carbon comprises:
depositing the active material in the pores of the porous carbon by gas phase co-deposition to form silicon nanoparticles and carbon nanoparticles.

16. The method for preparing a negative electrode material according to claim 15, **characterized in that**
a volume ratio of a silicon source gas to a carbon source gas for silicon-carbon co-deposition is greater than or equal to 6: 1; and/or
a concentration of a silicon source gas in a gas source for silicon-carbon co-deposition is 5% to 80%.

17. The method for preparing a negative electrode material according to claim 15 or 16, **characterized in that**
a silicon source gas for the co-deposition comprises one or more of monosilane, disilane, trisilane, monochlorosilane, dichlorosilane, or trichlorosilane; and/or
a carbon source gas for the co-deposition comprises one or more of methane, ethane, butane, propane, ethylene, propylene, butene, or acetylene.

18. The method for preparing a negative electrode material according to any one of claims 13 to 17, **characterized in that** the method further comprises:
performing gas phase deposition on the porous carbon to form a carbon coating layer, wherein
a deposition gas for the gas phase deposition is a mixed gas of C₂H₂ and N₂, wherein a volume percent of C₂H₂ is 2% to 20%, a gas flow rate introduced is 100 to 300 mL/min, a reaction temperature is 800 °C to 1000 °C, and a deposition reaction time is 0.5 to 2 hours.
